# EUROPÄISCHE PATENTSCHRIFT

(11) **EP 1 727 770 B1**
(45) Veröffentlichungstag und Bekanntmachung des Hinweises auf die Patenterteilung: **16.04.2008**
(21) Anmeldenummer: 05733703.2
(22) Anmeldetag: 24.02.2005
(51) Int. Cl.: C02F 9/14, C02F 103/42

(54) **VERFAHREN ZUR WASSERAUFBEREITUNG VON BEWEGUNGS- UND THERAPIEBECKEN**
METHOD FOR TREATING WATER FROM DISPLACEMENT AND THERAPY BASINS
PROCEDE DE TRAITEMENT DES EAUX PROVENANT DE BASSINS DE MOUVEMENT ET DE THERAPIE

(30) Priorität: 26.02.2004 DE 102004010188
(43) Veröffentlichungstag der Anmeldung: 06.12.2006
(73) Patentinhaber: Technisches Zentrum Entwicklungs- &HandelsGmbH, 04229 Leipzig (DE)
(72) Erfinder: FITZNER, Wigand, 04207 Leipzig (DE); LOETTEL, Wolfgang, 06366 Köthen (DE); LOETTEL, Eyk, 06369 Pfriemsdorf (DE); KLUG, Bernhard, 01796 Pirna (DE); WORSCHECH, Manfred, 06188 Oppin (DE); SAUNUS, Christoph, 24791 Duvenstedt (DE)
(74) Vertreter: Heyner, Klaus
(86) Internationale Anmeldenummer: PCT/DE2005/000340
(87) Internationale Veröffentlichungsnummer: WO 2005/082794

(56) Entgegenhaltungen:
- EP-A- 0 401 487
- EP-A- 1 378 493
- DE-A1- 3 203 218
- US-A- 4 115 267
- US-A- 4 197 815
- US-A- 4 203 390

## Beschreibung

Die Erfindung betrifft ein Verfahren zur Wasseraufbereitung von Bewegungs- und Therapiebecken für Menschen und Tiere, nachfolgend Probanden genannt, gemäß dem Oberbegriff des Hauptanspruchs.

Im Humanbereich sind für viele Anwendungen der Wassertherapie die herkömmlichen Verfahren und Verfahrenskombinationen zur Wasseraufbereitung nicht geeignet. Personen mit Hautschädigungen können die Wassertherapie nur anwenden, wenn keine zusätzlich schädigenden Inhaltsstoffe eingesetzt werden. Gesundheitliche Folgeschäden durch gebundenes Chlor, die anorganischen Chloramine und die organischen Amine, auf der Haut und an den Atmungsorganen zusammen mit den Allergien sind regelmäßig auch im Schwimmbadbereich zu verzeichnen. Die anorganischen Chloramine entstehen überwiegend aus Harnstoff, der mit Urin und Schweiß in das Wasser gelangt, und die organischen Amine aus Aminosäuren, dem Hydrolyseprodukt der kondensierten Aminosäuren der menschlichen (und tierischen) Haut und sonstiger Ausscheidungen. Da beide leicht flüchtig sind, machen sie sich schon bei geringsten Konzentrationen durch einen unangenehmen stechenden Geruch bemerkbar. Obwohl die Gehalte dieser gebundenen Chlorprodukte nach den derzeitigen Vorschriften beschränkt sind (0,2mg/l), besitzen sie für eine große Zahl von Probanden zunehmend gesundheitliche Bedeutung, so dass sich der Einsatz von Chlor oder Brom als Desinfektionsmittel mit Depotwirkung verbietet.

Zunehmend wird für die Rehabilitation und für das Training von Tieren, insbesondere Pferde, Kamele oder Hunde, die Wassertherapie, ähnlich wie im Humanbereich, angewendet. Obwohl die Rehabilitations- und Trainingserfolge der Wassertherapie bei Tieren sehr vielversprechend sind, avancierten in diesem Zusammenhang die schlechte Hygiene und die Erkrankungsmöglichkeiten der Tiere zu einem viel diskutierten Thema. Der bereits erwähnte Einsatz von Chlor und Brom ist für den Tierbereich grundsätzlich nicht geeignet. Jedes Tier weist zusätzlich auf seiner Haut und in seinem Fell Schmutzpartikel und Mikroorganismen auf, die in das Wasser eingespült werden. Da die Bewegungs- und Therapiebecken nacheinander von Tieren verschiedener Ställe genutzt werden, besteht bei Becken die nicht einer natürlichen Selbstreinigung unterliegen die Gefahr, dass sich die gelösten Ausscheidungsprodukte sowie die verschiedenen pathogenen und nichtpathogenen Mikroorganismen aufkonzentrieren. Dies führt nicht selten zu massiven Hautentzündungen und Haarveränderungen, die gegebenenfalls irreversible Schäden bei den Tieren zur Folge haben. Ferner können die im Wasser befindlichen Inhaltsstoffe dazu beitragen, dass das Allgemeinbefinden sowie das Leistungsvermögen des Tieres beeinträchtigt wird. Eine orale Wasseraufnahme kann zu erheblichen inneren Schäden führen.

Zur Sicherstellung eines hygienischen und ästhetischen Qualitätsstandards für die Wassertherapie ist es deshalb unerlässlich, dass das kontaminierte Wasser der Bewegungs- und Therapiebecken periodisch oder kontinuierlich gereinigt und aufbereitet wird.

Diese Reinigung und Aufbereitung geschieht üblicherweise dadurch, dass das Becken einem Wasserwechsel unterzogen wird oder das abgesaugte Wasser in den nachgeschalteten und dem jeweiligen Verschmutzungsgrad mehr oder weniger gut angepassten Reinigungsstufen behandelt und dem Becken erneut zugeführt wird.

Der ständige Wasserwechsel ist jedoch für die meisten Anlagenbetreiber, vor allem in den hinsichtlich des Wasserverbrauchs hochbelasteten Sommermonaten, ökonomisch und ökologisch nicht vertretbar. Erfahrungsgemäß muss beispielsweise im tiermedizinischen Bereich von einer Frischwassererneuerungsrate von ca. 150 I Wasser/Pferd und für Anwendungen im humanen Bereich müssen von ca. 30 I Wasser/Person ausgegangen werden.

Bewegungs- und Therapiebecken mit periodischer Belegung oder Dauerbelegung erfordern spezifisch angepasste Reinigungsstufen in Kombination von externer Intensivbiologie und physikalischen Verfahrensstufen unter Verwendung solcher organisch-chemischer Oxydationsmittel, die zu keinen Schädigungen der Probanden führen.

Die Anforderungen an die Wasseraufbereitung und zugehörige Wasseraufbereitungs-Anlagen von Bewegungs- und Therapiebecken sind im Wesentlichen:
- Schaffung von hygienischen und ästhetischen Bedingungen zum Zwecke der Vermeidung von akuten oder chronischen Erkrankungen, z.B. Hauterkrankungen,
- Verzicht des Einsatzes von Chlor und chlorhaltigen Produkten,
- geringe Investitions- und Betriebskosten hinsichtlich der Wasseraufbereitungsanlage und der Zugabemittel und
- Möglichkeit der Regelung der Wasseraufbereitungsanlage, wobei die Zu- und Abschaltung und Intensität der Reinigungsstufen aufeinander abgestimmt und entsprechend dem Verschmutzungsgrad selbsttätig erfolgen soll.

Eine Übertragung herkömmlicher antimikrobieller Reinigungs- und/oder Aufbereitungsverfahren unter Verwendung von 0,3 bis 0,5 mg/l freiem Chlor, wie dieses im Humanbereich in Schwimmbädern angewendet wird, scheiden schon deshalb aus, da die Schleimhäute und Hautareale der Tiere gegenüber Chlor besonders überempfindlich reagieren.

Darüber hinaus sind die Verunreinigungen des Wassers der Bewegungs- und Therapiebecken für die Probanden gegenüber den Verunreinigungen des Wassers der Schwimmbäder in ihrer Quantität und Qualität zu unterschiedlich und weniger im Voraus planbar.

Aus dem Stand der Technik vorbekannt sind Anlagen, bei denen das Wasser von Schwimmrinnen für Tiere mittels einer Wasseraufbereitung analog einem privat genutzten Pool gereinigt und aufbereitet wird. Hierbei wird als Desinfektionsmittel Chlor eingesetzt. Da diese Wasseraufbereitungsanlagen nicht für die hohen und ungünstigen Kohlenstoff-, Stickstoff- und Phosphor-Konzentrationsverhältnisse ausgelegt sind, können durch diese Wasseraufbereitungsmaßnahme keine tierhygienischen Bedingungen geschaffen werden.

Gemäß der derzeit geltenden Norm "Aufbereitung von Schwimmbad- und Badebeckenwasser" sind die Bedingungen für den Humanbereich jedoch sehr eng gefasst. Zur Reinigung und Aufbereitung des Wassers ist eine Kombination von Chlor mit einer Ozon-Nachbehandlung vorgeschrieben. Als besonders nachteilig an dieser Wasseraufbereitung ist der hohe apparative Aufwand, das für Probanden schädliche Chlor sowie der Einsatz und die Entsorgung der zur Adsorption eingesetzten Aktivkohle zu nennen.

In DE 199 63 583 A1 bzw. in DE 100 01 878 A1 sind Aqua-Trainer für Menschen bzw. Tiere beschrieben und erste Lösungsansätze zur Reinigung des Beckenwassers aufgezeigt. Gegenstand dieser Erfindungen ist ein für Rehabilitations- und Rekonvaleszenzzwecke nutzbares Schwimmbecken, in dem ein verstellbares Laufband angeordnet ist. Zur Energieversorgung und zum Antrieb des Laufbandes sowie der Pumpen einer optional eingesetzten Gegenstromanlage ist ein Wasser-Hydraulik-Motor vorgesehen. Die Wasseraufbereitungsanlage beinhaltet eine mechanische Reinigungsstufe mit einem Grobstoff-Aktivkohle-Filter sowie eine UV-Bestrahlung und eine OzonBehandlung des Wassers. Der Wasseraufbereitungsanlage ist erfindungsgemäß ein Brauchwasserauffangbecken vorgeschaltet und ein Frischwasserbecken nachgeschaltet. Obwohl das eingesetzte Ozon eine sehr schnelle Inaktivierung von Bakterien und Viren bewirkt, ist die desinfizierende Wirkung der Ozonisierung nicht dauerhaft, da Ozon instabil ist und kaum eine Depotwirkung aufweist. Zur Beseitigung dieses Missstandes müsste jedoch zusätzlich eine biologische Nachbehandlung des Beckenwassers erfolgen, was jedoch der Anmeldeschrift nicht zu entnehmen ist. Die EP0401487 A2 beschreibt eine weitere Anlage in Wasseraufbereitung von Trainingbecken.

Die Aufgabe der Erfindung besteht nunmehr darin, ein Verfahren zur Wasseraufbereitung von Bewegungs- und Therapiebecken zu entwickeln, mit dem eine kontinuierliche hohe Reinigungsleistung bei zum Teil nur temporär genutzten Bewegungs- und Therapiebecken mit alternierenden Verschmutzungsgraden des Wassers erzielt werden kann.

Nach der Konzeption der Erfindung umfasst das Verfahren zur Wasseraufbereitung von Bewegungs- und Therapiebecken die nachfolgend genannten Verfahrensschritte:
- Filtration eines abgesaugten kontaminierten Beckenwassergesamtvolumenstroms,
- Zugabe eines organischen Flockungsmittels in den Beckenwassergesamtvolumenstrom und anschließende Filtration der Flocken und ungelösten Schwebstoffe,
- Aufteilung des abgesaugten Beckenwasservolumenstroms in einen ersten, biotechnologisch zu behandelnden Beckenwasserteilvolumenstrom und in einen zweiten, physikalisch zu behandelnden Beckenwasserteilvolumenstrom, wobei
   o die abzuführenden Inhaltsstoffe des ersten Beckenwasserteilvolumenstrom in einem ersten Reaktionsraum durch eine Mikroorganismenpopulation verstoffwechselt werden, und anschließend in einem zweiten Reaktionsraum mit organisch-chemischen Oxidationsmitteln in Kontakt gebracht werden und
   o der zweite Beckenwasserteilvolumenstrom einer Ultraschall- und/oder UV-Behandlung unterzogen wird, und anschließend die dabei entstehenden Trübstoffe durch eine nachfolgende Filtration abgeschieden werden und
- der erste Beckenwasserteilvolumenstrom und der zweite Beckenwasserteilvolumenstrom dem Bewegungs- und Therapiebecken wieder gereinigt zugeführt werden.

Der Begriff Bewegungs- und Therapiebecken für die Wassertherapie umfasst nachfolgend alle mobilen und stationären Wasserbecken, Schwimmrinnen, Schwimmanlagen, Container oder wasserführende Kanäle in Kombination mit Gegenstromanlagen und/oder Laufbändern.

Das Verfahren zur Wasseraufbereitung von Bewegungs- und Therapiebecken umfasst die Kombination aus einer chemischen Reinigungsstufe, einer biotechnologischen Reinigungsstufe und einer physikalischen Reinigungsstufe unter kontinuierlicher Einhaltung probanden-essentieller Umgebungsbedingungen. Nach der Konzeption der Erfindung können die physikalische Reinigungsstufe und die biotechnologische Reinigungsstufe mit zwei getrennten Beckenwasserteilvolumenströmen simultan betrieben werden oder die physikalische Reinigungsstufe und die biotechnologische Reinigungsstufe von einem Beckenwassergesamtvolumenstrom jeweils in Verbindung mit der chemischen Reinigungsstufe wechselseitig durchlaufen werden.

Es erschließt sich für den Fachmann, dass die Prozessführung derart gestaltet werden kann, dass einerseits nur eine physikalische Aufbereitung bzw. eine biotechnologische Aufbereitung mit dem gesamten Beckenwasservolumenstrom realisiert werden kann, wenn einer der beiden Strömungspfade vollständig geschlossen ist. Andererseits können auch zwei Beckenwasserteilvolumenströme simultan einer physikalischen und einer biotechnologischen Aufbereitung unterzogen werden, wenn beide Strömungspfade mindestens teilweise freigegeben werden.

Um eine simultane Aufbereitung zweier Beckenwasserteilvolumenströme unter Anwendung der physikalischen bzw. biotechnologischen Reinigungsschritte zu gewährleisten, ist vorgesehen, den abgesaugten Beckenwassergesamtvolumenstrom nach der Flockungsmittelzugabe in zwei Beckenwasserteilvolumenströme aufzuteilen. Dazu sind in den jeweiligen Strömungspfaden für die beiden Beckenwasserteilvolumenströme von vorzugsweise mit einem Motor angetriebene Drossel- und Absperreinrichtungen platziert. Eine Freigabe der beiden Strömungspfade zwischen 0 und 100% durch die Drossel- und Absperreinrichtungen kann wiederum manuell sowie automatisch gemäß einem Programm oder in Abhängigkeit der Qualität und Quantität der Verschmutzung des Beckenwassers erfolgen.

Die physikalische Reinigungsstufe umfasst eine mechanische Vorreinigung unter Verwendung eines Filters, eine Ultraschall-Bestrahlung, eine sich daran anschließende UV-Bestrahlung und eine mechanische Nachklärung unter Verwendung eines Filters. Während die Ultraschallwellen die Schutzschilde der Inhaltsstoffe des Beckenwassers aufspalten bzw. aufbrechen und die Bakterien oder Mikroben damit freilegen, werden bei der sich daran anschließenden UV-Bestrahlung die freigelegten Keime abgetötet und die zur Vermehrung benötigte DNS der Zellen zerstört.

Die Zugabe eines biologisch abbaubaren Flockungsmittels und die Dosierung mit einem organisch-chemischen Oxydationsmittel sind Bestandteile der chemischen Reinigungsstufe. Vorzugsweise werden organische Flockungsmittel eingesetzt.

Als bevorzugtes organisch-chemisches Desinfektions- und Oxydationsmittel wird die gegen alle für Menschen und Tiere bedeutsamen Bakterien, Bakterien-Sporen, Pilze und Viren wirksame Peressigsäure (PES) eingesetzt. Peressigsäure besitzt die höchste Wirkungsgeschwindigkeit aller bekannten Mikrobiozide ohne Wirkungslücken. Die hervorragend lipidlöslichen PES-Moleküle durchdringen alle Zellmembranen und bringen ihre für Bakterien gefährliche Aktivsauerstoff-Fracht bis zu den ungeschützten, oxydationsempfindlichen Stoffwechsel enzymen der Bakterien. Peressigsäure ist zudem umweltfreundlich, da bei seinem Einsatz nur Sauerstoff und biologisch leicht abbaubare Essigsäure entstehen.

Bei der zur physikalischen Reinigungsstufe gehörenden mechanischen Reinigung zur Entfernung der groben Inhaltsstoffe, wie z. B. Haare und Hautpartikel, wird auch eine Teilmenge der gebildeten Biomasse durch Filtrierung mittels Filtern und durch die Zugabe des biologisch abbaubaren Flockungsmittels gezielt aus dem Beckenwasser entfernt.

Die biotechnologische Aufbereitung des Beckenwassers erfolgt vorzugsweise in zwei kaskadenartig und räumlich getrennt angeordneten Reaktionsräumen, wobei der in Fließrichtung zuerst von dem aufzubereitenden Beckenwasser erreichte Reaktionsraum als Bioreaktor ausgebildet ist.

Im Bioreaktor findet eine gesteuerte Verstoffwechslung der Inhaltsstoffe mit der zugeführten Mikroorganismenpopulation statt. Die Mikroorganismenpopulation liegt hierbei vorzugsweise als immobilisierte und/oder suspendierte Mikroorganismenpopulation der Gruppe S1 vor, die weder human- noch veterinär-pathogene Keime aufweist. Der biotechnologische Aufbereitungsprozess findet unter aeroben bis anoxischen Bedingungen im aufzubereitenden Beckenwasser statt. Im Ergebnis dieser Verstoffwechslung bzw. Oxydation ist eine Senkung des biochemischen und chemischen Sauerstoffbedarfs (BSB, CSB) zu verzeichnen.

Der Bioreaktor weist in vorteilhafter Weise eine Rührkesselcharakteristik auf, wobei dem Bioreaktor zur Sauerstoffversorgung zusätzlich bedarfsgerecht Luft zugeführt wird.

Als besonders vorteilhaft zur Erzielung einer signifikanten Erhöhung des Grades des Abbaus der Biomasse im aufzubereitenden Beckenwasser gegenüber herkömmlichen biotechnologischen Reaktionssystemen hat sich erwiesen, wenn im Bioreaktor die Verstoffwechslung der Inhaltstoffe mittels einer Hochzelldichtefermentation (HDF) durchgeführt wird.

Damit ergibt sich der Vorteil, dass unabhängig von den schwankenden Belastungen des aufzubereitenden (Becken)-wassers eine kontinuierliche vollständige Verstoffwechslung erfolgt.

Schwankende Wasserbelastungen entstehen zum einen durch die alternierende Belegung des Bewegungs- und Therapiebeckens und zum anderen durch den qualitativ und quantitativ vorab nicht bestimmbaren Eintrag von Schmutz, Hautpartikeln , Harn und Kot, Haaren oder Mikroorganismen als Wasserinhaltsstoffe durch die Probanden in Verbindung mit dem eingesetzten Flockungsmittel.

Mit einer maximalen Biomassekonzentration von 30 mg/l im Bioreaktor ist dann eine Anpassung an veränderte Belastungswerte jederzeit möglich. Dies wird durch eine Biomassezurückhaltung über eine Immobilisierung und/oder durch den Einsatz von Membranen erzielt. Im Bioreaktor erfolgt eine Entkopplung der hydraulischen Verweilzeit von den Wachstumsraten der leistungsfähigen Mikroorganismenpopulation, so dass bei der HDF Reaktionszeiten von ca. 1-2 Stunden erreicht werden können.

Die alternierende Belegung des Bewegungs- und Therapiebeckens und die nur kurze Verweilzeit stellen ungünstige Prozessbedingungen dar, denen man erfindungsgemäß mit der Zudosierung von systemnotwendigen Mikroorganismen begegnet. Vor Prozessbeginn wird deshalb dem Bioreaktor eine Menge einer Reinkultur von systemnotwendigen Mikroorganismen, respektive ein Inokulum, und während des Aufbereitungsprozesses in Abhängigkeit ihrer Umsetzung werden Starterkulturen zudosiert.

In einer besonders vorteilhaften Ausgestaltung der Erfindung kann zusätzlich ein Feed eines Nährsalzes dem Bioreaktor zugesetzt werden, um das Wachstum der eingebrachten Starterkulturen zu beschleunigen.

Durch die kontinuierliche Zugabe und die optimale Vermehrung der nährstoffabbauenden Mikroorganismenpopulationen haben diese gegenüber den durch die Probanden eingeschleppten schädlichen Mikroorganismen einen Wachstums- sowie einen Generationenvorsprung, der der Weiterentwicklung der unerwünschten Keime der Inhaltsstoffe entgegenwirkt.

In dem sich an den Biorektor anschließenden zweiten Reaktionsraum erfolgt die Zugabe des organisch-biologischen Oxydationsmittels, was eine Hemmung und Reduzierung der Biomasse im bereits aufbereiteten Beckenwasser bewirkt. Im Ergebnis dieser Maßnahme wird eine langanhaltende und konstante mikrobiozide Depotwirkung des Beckenwassers erzielt.

Der einer biotechnologischen Aufbereitung unterzogene stündliche Beckenwasserteilvolumenstrom beträgt das ca. 0,0- bis 1,0-fache, vorzugsweise jedoch das 0,05-fache, des Beckenvolumens. Der komplementäre zweite Volumenstrom, der einer rein physikalischen Aufbereitung unterzogen wird, beträgt ca. das 0,0- bis 1,0-fache, vorzugsweise jedoch das 0,45-fache, des Beckenvolumens.

Die Anreicherung von Stickstoffverbindungen im aufzubereitenden Beckenwasser wird durch eine optionale anaerobe Reinigungsstufe verhindert. Bei einer erhöhten Phosphatbelastung ist zur Phosphateliminierung eine zusätzliche physikalisch-chemische Reinigungsstufe vorgesehen.

Da die Qualität und die Quantität der Verschmutzung des Wassers des Bewegungs- und Therapiebeckens während der Belegungszeit als auch über die Nutzungszeit sehr unterschiedlich sein können, sind erfindungsgemäß in der Anlage mehrere Sensoren vorgesehen, die die Konzentration der Inhaltsstoffe kontinuierlich erfassen. Die erfassten Messgrößen werden nachfolgend mittels einer Regelung ausgewertet und in Abhängigkeit des Ergebnisses der Auswertung wird die dosierte selbsttätige Zugabe von Zugabemitteln vor allem während der Wasseraufbereitung veranlasst. Als Zugabemittel sind für den Bioreaktor Luft, Starterkulturen und gegebenenfalls ein Nährsalz für die Starterkulturen, für den zweiten Reaktionsraum das organisch-chemisches Oxydationsmittel und ein unmittelbar nach der Absaugung des aufzubereitenden Beckenwassers zugeführtes biologisch abbaubares Flockungsmittel vorgesehen.

Die Zugabe kann jedoch auch manuell oder zeitgesteuert erfolgen. Eine sich bewährte Prozessführung der Aufbereitung des Beckenwassers ist dadurch gekennzeichnet, dass die Zugabe des Desinfektions- und Oxydationsmittel vorwiegend während der Belegungszeit des Bewegungs- und Therapiebeckens erfolgt, die biotechnologische Aufbereitung vorwiegend in der Nichtbelegungszeit stattfindet und unmittelbar vor einer Belegung des Bewegungs- und Therapiebeckens die Enttrübung des Beckenwassers mittels der zur Filtration eingesetzten Filter durchgeführt wird.

Die vorgesehenen Filter weisen in Abhängigkeit ihres Einsatzortes eine unterschiedliche Porengröße auf. Ausgehend von dem Bewegungs- und Therapiebecken nimmt die Porengröße der in Fliessrichtung hintereinander platzierten Filter auf Grund des Reinigungsfortschritts des Beckenwassers ab

Die signifikanten Merkmale und Vorteile der Erfindung sind im Wesentlichen:
■ Entzug der Nahrungsgrundlage, z. B. für Algen, Bakterien und andere human- und tierpathogene Organismen, aus dem aufzubereitenden Beckenwasser
■ unter Anwendung der Hochzelldichtefermentation (30 g/l Biomasse) können im Bioreaktor die organischen Inhaltsstoffe verstoffwechselt werden,
■ Erzielung einer konstanten mikrobioziden Depotwirkung des Beckenwassers durch dosierte Zugabe von organisch-chemischen Oxydationsmitteln,
■ unter Anwendung einer umweltfreundlichen UV- und/oder Ultraschallbestrahlungseinrichtung können Legionellen und andere Mikroorganismen in dem warmwasserführenden Kreislauf abgetötet und ihre Vermehrung gestoppt werden,
■ Entkeimung des Beckenwassers erfolgt ohne das die Probanden schädigende Chlor oder die chlorhaltigen Produkte,
■ Prozessführung kann neben der chemischen Aufbereitung eine physikalische und/oder eine biotechnologische Aufbereitung des Beckenwassers beinhalten.

Weitere Einzelheiten, Merkmale und Vorteile der Erfindung ergeben sich aus der nachfolgenden Beschreibung eines Ausführungsbeispiels der Erfindung unter Bezugnahme auf die einzige Zeichnung, in dieser zeigt:

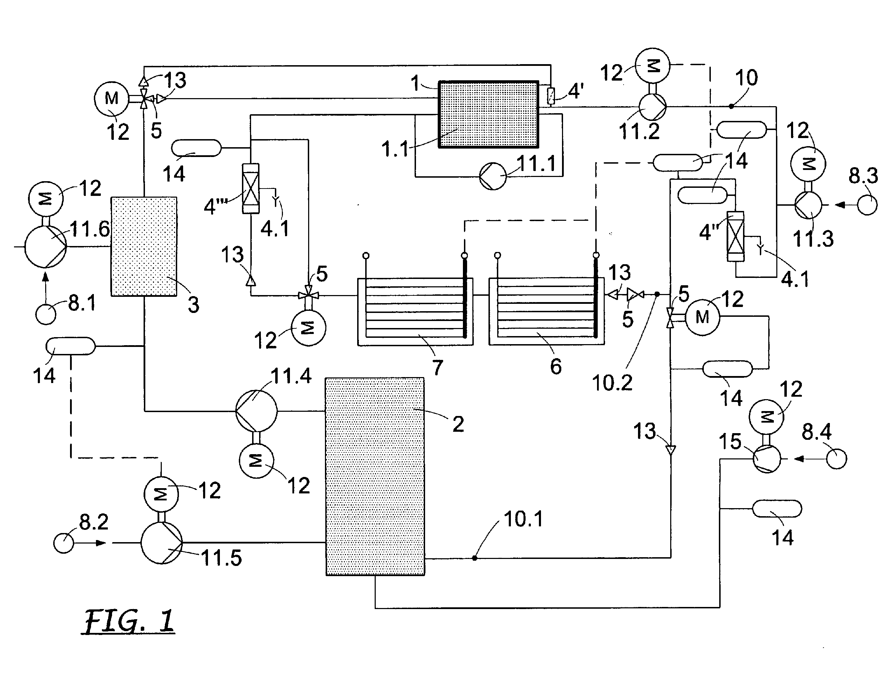

- Fig. 1: das Anlagenschema zur Wasseraufbereitung mit einer Darstellung der einzelnen Beckenwasserteilvolumenströme.

Die Fig. 1 illustriert das Anlagenschema zur Wasseraufbereitung mit der Darstellung der einzelnen Beckenwasservolumenströme 10, 10.1, 10.2, die der chemischen und biotechnologischen und/oder physikalischen Reinigungsstufe des Kreisprozesses des Verfahrens zur Wasseraufbereitung des Bewegungs- und Therapiebeckens 1 unterzogen werden.

In einem Bewegungs- und Therapiebecken 1 werden Probanden mittels Gegenstromanlagen therapiert. Eine hier dargestellte Gegenstromanlage ist durch die Pumpe 11.1 gekennzeichnet, die gemäß einem gewünschten Gegenstrom regelbar ausgebildet ist. Während der Therapie wird das vorhandene Beckenwasser 1.1 mit Hautpartikeln, Harn und Kot, Haaren, Mikroorganismen und anderen anhaftenden Substanzen kontaminiert. Das kontaminierte Beckenwasser 1.1 wird mittels einer dem Bewegungs- und Therapiebecken nachgeschalteten weiteren Pumpe 11.2 abgesaugt und nachfolgend als Beckenwassergesamtvolumenstrom 10 bezeichnet. Der stündlich abgesaugte Beckenwassergesamtvolumenstrom 10 beträgt das 0,01 bis 1,0-fache, vorzugsweise jedoch das 0,5-fache, des im Beckens 1 befindlichen Wasservolumens. Unmittelbar am nichtdargestellten Beckenablauf ist eine Filtereinheit 4' angeordnet, die zum Abtrennen grober Verunreinigungen des kontaminierten Beckenwassers 1.1 vorgesehen ist. Die Porengröße dieser Filtereinheit 4' beträgt weniger als 50.000 µm. Dem nunmehr mechanisch vorgereinigten Beckenwassergesamtvolumenstrom 10 wird nachfolgend kontinuierlich ein biologisch abbaubares Flockungsmittel 8.3 mittels einer Dosierpumpe 11.3 zugesetzt. Die Dosierpumpe 11.3 wird mittels eines Motors 12 angetrieben. Dieses Flockungsmittel 8.3 bewirkt, dass die in dem aufzubereitenden Beckenwassergesamtvolumenstrom 10 enthaltenen ungelösten schwebenden Inhaltsstoffe zum Flocken gebracht werden. Anschließend passiert der Beckenwassergesamtvolumenstrom 10 eine zweite Filtereinheit 4", die zur Vorfiltration verwendet wird. Die Porengröße dieser zweiten Filtereinheit 4" beträgt weniger als 5000 µm. In Fliessrichtung nach dieser zweiten Filtereinheit 4" wird der Beckenwassergesamtvolumenstrom 10 aufgeteilt, nämlich in den Beckenwasserteilvolumenstrom 10.1 und in den Beckenwasserteilvolumenstrom 10.2. Der Beckenwasserteilvolumenstrom 10.2, der ungefähr das 0,01 bis 1,0-fache, vorzugsweise das 0,45-fache, des im Becken 1 befindlichen Volumens 1.1 beträgt, wird nun einer Ultraschallanlage 6 und/oder einer UV-Anlage 7 zugeführt. Während dieses Verfahrensschrittes werden alle im Beckenwasserteilvolumenstrom 10.2 vorhandenen Mikroorganismen deaktiviert bzw. abgetötet. Nach der Deaktivierung passiert der Beckenwasserteilvolumenstrom 10.2 eine dritte Filtereinheit 4"' zum Abtrennen der als tote Mikroorganismen vorliegenden Partikel im Beckenwasserteilvolumenstrom 10.2. Die Porengröße dieser dritten Filtereinheit 4"' beträgt weniger als 100 µm. Mittels eines motorisch angetriebenen Dreiwegeventils 5 kann jedoch auch bei Vorliegen der entsprechenden Voraussetzungen, beispielsweise dem Nichtvorhandensein von Partikeln, die Filtereinheit 4"' überbrückt werden. Der Beckenwasserteilvolumenstrom 10.2 wird letztlich nach dem Verlassen der dritten Filtereinheit 4'" dem Bewegungs- und Therapiebecken 1 wieder gereinigt zugeführt.

Der Beckenwasserteilvolumenstrom 10.1 hingegen, der das 0,001 bis 0,1-fache, vorzugsweise jedoch das 0,05-fache des im Beckens 1 befindlichen Wasservolumens 1.1 aufweist, wird nach der zweiten Filtereinheit 4" den kaskadenartig zueinander angeordneten Reaktionsräumen 2, 3 zugeführt. Die Aufteilung der Beckenwasserteilvolumenströme 10.1 und 10.2 erfolgt vorzugsweise mittels eines im Strömungspfad des Beckenwasserteilvolumenstrom 10.1 angeordneten Zweiwege-Regelventils 5, das von einem gesteuerten Motor 12 angetrieben wird. Die Ansteuerung des Motors erfolgt durch mindestens einen Sensor 14, der den Beckenwasserteilvolumenstrom 10.1 und/oder die in dem Beckenwasserteilvolumenstrom 10.1 enthaltenen Stoffkonzentrationen (z.B. CSB, TOC) und /oder andere physikalische Größen (z.B. Trübung, pH-Wert) erfasst. Das Zweiwege-Regelventil 5 ist derart ausgebildet, um den Strömungspfad für den Beckenwasserteilvolumenstrom 10.1 zwischen >0 bis 100 % freizugeben. Für den Fall, dass das ZweiWegeventil 5 vollständig geschlossen ist, wird kein Beckenwasserteilvolumenstrom 10.1 generiert, der Beckenwasserteilvolumenstrom 10.2 entspricht dann folglich dem Gesamtvolumenstrom 10 und wird nach der chemischen Reinigungsstufe, nämlich der Zugabe von biologisch abbaubaren Flockungsmitteln 8.3 nur der physikalischen Behandlung durch eine Ultraschall-Bestrahlung 6 und gegebenenfalls einer nachfolgenden UV-Bestrahlung 7 unterworfen.

Der Beckenwasserteilvolumenstrom 10.1 wird nunmehr dem ersten Reaktionsraum 2, vorzugsweise mit Rührkesselcharakteristik, zugeführt. Der Reaktionsraum 2 weist ein Nettovolumen mit einem 0,005 bis 0,5-fachen, vorzugsweise jedoch ein Nettovolumen mit dem 0,05-fachen des sich im Bewegungs- und Therapiebecken 1 sich befindlichen Gesamtvolumens 1.1 auf. In diesem ersten Reaktionsraum 2 befinden sich eine immobilisierte und/oder suspendierte Mikroorganismenpopulation 8.2 der Gruppe S 1. Mikroorganismen 8.2, die dieser Gruppe S1 angehören, weisen keine human- und tierpathogenen Keime auf. Zur Erzielung einer optimalen Belüftung der Mikroorganismenpopulation 8.2 und des Beckenwasserteil-volumenstroms 10.1 wird dem ersten Reaktionsraum 2 kontinuierlich Luft zugeführt, die vorzugsweise mittels des Gebläses 15 in den Reaktionsraum 2 eingebracht wird.

Durch den Stoffaustausch zwischen der Mikroorganismenpopulation 8.2 und den Inhaltsstoffen des Beckenwasserteilvolumenstrom 10.1 werden die Inhaltsstoffe abgebaut. Um in dem ersten Reaktionsraum 2 eine konstante aktive Mikroorganismenpopulation 8.2 aufrecht zu erhalten, erfolgt in Abhängigkeit der Abwasserbelastung eine dosierte Zugabe weiterer aktiver Mikroorganismen 8.2. Die Zugabe erfolgt mittels einer Dosierpumpe 11.5, die von einem Stellmotor 12 angetrieben wird. Mittels eines Sensors 14, der die Stoffkonzentrationen (z.B. CSB, TOC) und /oder andere physikalische Größen (z.B. Trübung, pH-Wert) der Inhaltsstoffe des den ersten Reaktionsraum 2 verlassenden Beckenwasserteilvolumenstrom 10.1 erfasst, wird die Zugabemenge an Starterkulturen 8.2, systembedingten Mikroorganismen 8.2, gesteuert.

Der von dem ersten Reaktionsraum 2 mittels einer Pumpe 11.4 abgesaugte Beckenwasserteilvolumenstrom 10.1 passiert eine nichtdargestellte Immobilisat- und/oder Mikroorganismenrückhalteeinrichtung und wird nachfolgend dem zweiten Reaktionsraum 3 zugeführt. In diesem zweiten Reaktionsraum 3 erfolgt die Zugabe von organisch-chemischen Oxydationsmittel 8.1, vorzugsweise Peressigsäure, mit nicht Probandenschädigendem Charakter, welches die restlichen, gegebenenfalls noch nicht abgetöteten Keime oxidiert. Nach einer entsprechenden Verweilzeit von 0 bis 120 min, üblicherweise 15 -.20 min, in dem zweiten Reaktionsraum 3 wird der Beckenwasserteilvolumenstrom 10.1 auf einem ersten Strömungspfad entweder unmittelbar dem Bewegungs- und Therapiebecken 1 oder alternativ auf einem zweiten Strömungspfad dem Ablauf des Bewegungs- und Therapiebecken 1 zugeführt. Die beiden Strömungspfade können auch nur mit einer Teilmenge des Beckenwasserteilvolumenstrom 10.1 beaufschlagt werden, indem das geregelte Dreiwege-Stellventil 5 die Querschnitte der Strömungspfade entsprechend freigibt. Die beiden Beckenwasserteilvolumenströme 10.1 und 10.2 können entweder als Beckenwassergesamtvolumenstrom 10, oder wie in der Fig. 1 dargestellt, getrennt dem Bewegungs- und Therapiebecken 1 zugeführt werden. Alle dargestellten Sensoren 14 liefern der nichtdargestellten Regelung Messgrößen als Eingangsgrößen, die anschließend entsprechend mit einem eingestellten Sollwert verglichen werden. Die Regelabweichung zwischen Sollwert und Istwert beeinflusst letztlich die Stelleinrichtungen, also die Ventile, Motoren und das Gebläse.

### LISTE DER BEZUGSZEICHEN

- 1: Bewegungs- und Therapiebecken
- 1.1: Beckenwasser
- 2: erster Reaktionsraum / Bioreaktor
- 3: zweiter Reaktionsraum
- 4' - 4"': Filter
- 4.1: Überlauf
- 5: Drossel- und Absperreinrichtung
- 6: Ultraschallanlage
- 7: UV-Anlage
- 8: Zugabemittel
- 8.1: organisch-chemisches Oxydationsmittel
- 8.2: Starterkulturen / Mikroorganismenpopulation
- 8.3: biologisches Flockungsmittel
- 8.4: Luft
- 9: Steuerleitungen
- 10: Beckenwassergesamtvolumenstrom
- 10.1: erster Beckenwasserteilvolumenstrom
- 10.2: zweiter Beckenwasserteilvolumenstrom
- 11.1 -: Umwälz- oder Dosierpumpe
- 11.6:
- 12: Motor
- 13: Fließrichtung
- 14: Messwertaufnehmer / Sensoren
- 15: Gebläse / Verdichter

## Patentansprüche

1. Verfahren zur Wasseraufbereitung von Bewegungs- und Therapiebecken (1), für Menschen und Tiere, bei dem das Beckenwasser (1.1) in einem Kreislauf in mehreren Reinigungsstufen aufbereitet wird, **gekennzeichnet durch** die folgenden Verfahrensschritte:
■ Filtration eines abgesaugten kontaminierten Beckenwassergesamtvolumenstroms (10) mittels eines Filter (4'),
■ Aufteilung des abgesaugten Beckenwasservolumenstroms (10) in einen ersten, biotechnologisch zu behandelnden Beckenwasserteilvolumenstrom (10.1) und in einen zweiten, physikalisch zu behandelnden Beckenwasserteilvolumenstrom (10.2), wobei
o die abzuführenden Inhaltsstoffe des ersten Beckenwasserteilvolumenstroms (10.1) in einem ersten Reaktionsraum (2) **durch** eine Mikroorganismenpopulation (8.2) verstoffwechselt werden, und anschließend in einem zweiten Reaktionsraum (3) mit organisch-chemischen Oxydationsmitteln (8.1) in Kontakt gebracht werden und
o der zweite Beckenwasserteilvolumenstrom (10.2) einer Ultraschall (6)- und/oder UV-Behandlung (7) unterzogen wird, und nachfolgend die feinen Trubstoffe unter Verwendung eines Filters (4"') abgeschieden werden und
■ der erste Beckenwasserteilvolumenstrom (10.1) und der zweite Beckenwasserteilvolumenstrom (10.2) dem Bewegungs- und Therapiebecken (1) wieder gereinigt zugeführt werden.

2. Verfahren zur Wasseraufbereitung nach Anspruch 1, **dadurch gekennzeichnet, dass** zusätzlich die Zugabe eines Flockungsmittels (8.3) in den Beckenwassergesamtvolumenstrom (10) und anschließend die Filtration der ungelösten Schwebstoffe mittels eines Filters (4") erfolgt.

3. Verfahren zur Wasseraufbereitung nach Anspruch 1 oder 2, **dadurch gekennzeichnet, dass** die physikalische Reinigungsstufe und die biotechnologische Reinigungsstufe unter Verwendung von Absperr- und Drosseleinrichtungen (5) mit dem ersten Beckenwasserteilvolumenstrom (10.1) und dem zweiten Beckenwasserteilvolumenstrom (10.2) simultan oder mit dem Beckenwassergesamtvolumenstrom (10) wechselseitig betrieben werden.

4. Verfahren zur Wasseraufbereitung nach einem der Ansprüche 1 bis 3, **dadurch gekennzeichnet, dass** bei einer simultanen Betriebsweise die Strömungspfade für den ersten und zweiten Beckenwasserteilvolumenstrom (10.1, 10.2) zumindest teilweise freigegeben sind und bei einer wechselseitigen Betriebsweise einer der beiden Strömungspfade vollständig verschlossen ist.

5. Verfahren zur Wasseraufbereitung nach einem der Ansprüche 1 bis 4, **dadurch gekennzeichnet, dass** der erste Beckenwasserteilvolumenstrom (10.1) dem 0,05-fachen und der zweite Beckenwasserteilvolumenstrom (10.2) dem 0,45-fachen des abgesaugten Beckenwassergesamtvolumenstroms (10) entspricht.

6. Verfahren zur Wasseraufbereitung nach einem der Ansprüche 1 bis 5, **dadurch gekennzeichnet, dass** die zur biotechnologischen Aufbereitung des Beckenwassers eingesetzten Reaktionsräume (2, 3) kaskadenartig und räumlich getrennt zueinander angeordnet sind.

7. Verfahren zur Wasseraufbereitung nach einem der Ansprüche 1 bis 6, **dadurch gekennzeichnet, dass** während des Reinigungsprozesses die Qualität und die Quantität der Verschmutzung des Beckenwassers mittels Sensoren (14) kontinuierlich erfasst werden, nachfolgend mittels einer Regelung ausgewertet werden und in Abhängigkeit des Ergebnisses der Auswertung die dosierte Zugabe von Zugabemitteln (8):
■ organisch-chemischen Oxydationsmittel (8.1) und/oder
■ Mikroorganismenpopulation als Starterkulturen (8.2) und/oder
■ Nährsalzen und/oder
■ biologisch abbaubaren Flockungsmittel (8.3) und/oder
■ Luft (8.4)
selbsttätig gesteuert wird.

8. Verfahren zur Wasseraufbereitung nach einem der Ansprüche 1 bis 7, **dadurch gekennzeichnet, dass** vor Beginn des Reinigungsprozesses dem ersten Reaktionsraum (2) ein Inokulum zudosiert wird und die Menge der aktiven Mikroorganismenpopulation (8.2) durch eine kontinuierlich dosierte Zugabe weiterer Mikroorganismen aufrecht erhalten wird.

9. Verfahren zur Wasseraufbereitung nach einem der Ansprüche 1 bis 8, **dadurch gekennzeichnet, dass** der biotechnologische Aufbereitungsprozess im ersten Reaktionsraum (2) unter aeroben bis anoxischen Bedingungen stattfindet.

10. Verfahren zur Wasseraufbereitung nach einem der Ansprüche 1 bis 9, **dadurch gekennzeichnet, dass** dem eine Rührkesselcharakteristik aufweisenden ersten Reaktionsraum (2) zur Sauerstoffversorgung zusätzlich Luft (8.4) zugeführt wird.

11. Verfahren zur Wasseraufbereitung nach einem der Ansprüche 1 bis 10, **dadurch gekennzeichnet, dass** als organisch-chemisches Desinfektions- und Oxydationsmittel (8.1) im zweiten Reaktionsraum (3) Peressigsäure eingesetzt wird.

12. Verfahren zur Wasseraufbereitung nach einem der Ansprüche 1 bis 11, **dadurch gekennzeichnet, dass** unter Anwendung der Hochzelldichtefermentation (HDF) im ersten Reaktionsraum (2) mit einer maximalen Biomassekonzentration von bis zu 30 g/l auch unter Zugabe von Mikroorganismen (8.2) die Wasserinhaltsstoffe des ersten Beckenwasserteilvolumenstroms verstoffwechselt werden können.

13. Verfahren zur Wasseraufbereitung nach einem der Ansprüche 1 bis 12, **dadurch gekennzeichnet, dass** die Zugabe des Oxydationsmittels (8.1) Peressigsäure vorwiegend während der Belegungszeit des Bewegungs- und Therapiebeckens (1) erfolgt, die biotechnologische Aufbereitung des Beckenwassers (1.1) vorwiegend kontinuierlich stattfindet.

14. Verfahren zur Wasseraufbereitung nach einem der Ansprüche 1 bis 13, **dadurch gekennzeichnet, dass** zusätzlich eine anaerobe Reinigungsstufe vorgesehen ist, die die Anreicherung von Stickstoffverbindungen im Beckenwasser verhindert.

15. Verfahren zur Wasseraufbereitung nach einem der Ansprüche 1 bis 14, **dadurch gekennzeichnet, dass** bei einer Erhöhung der Phosphatbelastung im Beckenwasser eine anaerobe Phosphateliminierung und/oder eine physikalisch-chemische Reinigungsstufe vorgesehen sind.

## Claims

1. Method for treating water from displacement and therapy basins (1) for human beings and animals, according to which the basin water (1.1) is treated in a circuit including several cleaning stages **characterized by** the following process steps:
• Filtration of a drawn off contaminated basin water total volume flow (10) using a filter (4'),
• division of the drawn off basin water volume flow (10) into a first basin water partial volume flow (10.1) to be treated biotechnologically and a second basin water partial volume flow (10.2) to be treated physically, whereby
o the constituents to be carried away of the first basin water partial volume flow (10.1) are catabolized by a microbial population (8.2) in a first reaction chamber (2), then being brought into contact with organic-chemical oxidizing agents (8.1), and
o the second basin water partial volume flow (10.2) is subjected to an ultrasonic treatment (6) and/or a UV-treatment (7), then the fine settlings being separated using a filter (4"'), and
• the first basin water partial volume flow (10.1) and the second basin water partial volume flow (10.2) are refed into the displacement and therapy basin (1) in cleaned condition.

2. Method for treating water to claim 1 **characterized by** that additionally, a coagulant (8.3) is added to the basin water total volume flow (10), then the unsolved suspended material filtered using a filter (4").

3. Method for treating water to claim 1 or 2 **characterized by** that, using blocking and throttling devices (5), the physical cleaning stage and the biotechnological cleaning stage are carried out simultaneously on the first basin water partial volume flow (10.1) and the second basin water partial volume flow (10.2), or alternately on the basin water total volume flow (10).

4. Method for treating water to any of the claims 1 to 3 **characterized by** that in simultaneous operation, the flow paths for the first and second basin water partial volume flows (10.1, 10.2) are at least partially unblocked, and in alternating operation, one of both flow paths is completely closed.

5. Method for treating water to any of the claims 1 to 4 **characterized by** that the first basin water partial volume flow (10.1) is equal to the 0.05-fold, the second basin water partial volume flow (10.2) is equal to the 0.45-fold of the drawn off basin water total volume flow (10).

6. Method for treating water to any of the claims 1 to 5 **characterized by** that the reaction chambers (2, 3) installed for the biotechnological treatment of the basin water are positioned in cascade-like manner, physically separated from each other.

7. Method for treating water to any of the claims 1 to 6 **characterized by** that during the cleaning process, the quality and the quantity of the contamination of the basin water are continuously sensed by means of sensors (14), then evaluated by means of a closed-loop control system, and dependent on the result of the evaluation, the metered addition of additional agents:
• an organic-chemical oxidizing agent (8.1) and/or
• a microbial population (8.2) as starter culture and/or
• nutrient salts and/or
• a biodegradable coagulant (8.3), and/or
• air (8.4)
is automatically controlled.

8. Method for treating water to any of the claims 1 to 7 **characterized by that** before the cleaning process is started, an inoculum is metered into the first reaction chamber (2), the amount of the active microbial population (8.2) being maintained by way of continuously metering in more microorganisms.

9. Method for treating water to any of the claims 1 to 8 **characterized by** that the biotechnological treatment in the first reaction chamber (2) takes place under aerobic to anoxic conditions.

10. Method for treating water to any of the claims 1 to 9 **characterized by** that for oxygen supply, air (8.4) is additionally fed to the first reaction chamber (2), having an agitated tank characteristic.

11. Method for treating water to any of the claims 1 to 10 **characterized by** that peroxyacetic acid is used in the second reaction chamber (3) as organic-chemical disinfecting and oxidizing agent (8.1).

12. Method for treating water to any of the claims 1 to 11 **characterized by that** by using the high cell density fermentation (HDF), in the first reaction chamber (2) with a maximum biomass concentration of up to 30 g/l, the water constituents of the first basin water partial volume flow (10.1) can also be catabolized with microorganisms (8.2) being added.

13. Method for treating water to any of the claims 1 to 12 **characterized by** that adding of the oxidizing agent (8.1) peroxyacetic acid is performed preferably during the occupied time of the displacement and therapy basin (1), the biotechnological treatment of the basin water (1.1) being performed preferably continuously.

14. Method for treating water to any of the claims 1 to 13 **characterized by** that an additional anaerobic cleaning stage is provided preventing nitrogen compounds from accumulating in the basin water.

15. Method for treating water to any of the claims 1 to 14 **characterized by** that when the phosphate load of the basin water increases, anaerobic phosphate removal and/or a physical-chemical cleaning stage are provided.

## Revendications

1. Procédé de traitement des eaux provenant de bassins de mouvement et de thérapie (1) à usage humain et animal, le traitement des eaux du bassin (1.1) comprenant un cycle de plusieurs étapes de nettoyage, **caractérisé par** les procédés suivants :
■ Filtration au moyen d'un filtre (4') du débit volumétrique total d'eau du bassin (10) contaminée et extrait par aspiration,
■ Répartition du débit volumétrique d'eau du bassin (10) extrait par aspiration en un premier débit volumétrique partiel d'eau du bassin (10.1) à soumettre à un traitement biotechnologique et en un deuxième débit volumétrique partiel d'eau du bassin (10.2) à soumettre à un traitement physique,
o les substances à éliminer du premier débit volumétrique partiel d'eau du bassin (10.1) étant métabolisées dans un premier espace de réaction (2) par une population microorganique (8.2) avant de subir, dans un deuxième espace de réaction (3), le contact avec des oxydants organiques chimiques (8.1), et
o le deuxième débit volumétrique partiel d'eau du bassin (10.2) étant soumis à un traitement ultrason (6) et/ou traitement UV (7) suivi de la séparation des fines particules en suspension au moyen d'un filtre (4"') et
o le premier débit volumétrique partiel d'eau du bassin (10.1) et le deuxième débit volumétrique partiel d'eau du bassin (10.2) étant ramenés dans le bassin de mouvement et de thérapie (1) après nettoyage.

2. Procédé de traitement des eaux selon la revendication 1, **caractérisé par** l'adjonction supplémentaire d'un floculant (8.3) dans le débit volumétrique total d'eau du bassin (10) suivie de la filtration des matières en suspension non dissoutes au moyen d'un filtre (4").

3. Procédé de traitement des eaux selon la revendication 1 ou 2, **caractérisé en ce que** l'étape de nettoyage physique et l'étape de nettoyage biotechnologique ont lieu simultanément pour le premier débit volumétrique partiel d'eau du bassin (10.1) et le deuxième débit volumétrique partiel d'eau du bassin (10.2) en utilisant des dispositifs d'étranglement et de retenue (5), ou en alternance avec le débit volumétrique total d'eau du bassin (10).

4. Procédé de traitement des eaux selon l'une des revendications 1 à 3, **caractérisé en ce que** les voies d'écoulement du premier et deuxième débit volumétrique partiel d'eau du bassin (10.1, 10.2) sont ouvertes du moins partiellement lors du mode de service simultané et que l'une des deux voies d'écoulement reste entièrement fermée lors du mode de service alternant.

5. Procédé de traitement des eaux selon l'une des revendications 1 à 4, **caractérisé en ce que** le premier débit volumétrique partiel d'eau du bassin (10.1) égale à 0,05 fois et le deuxième débit volumétrique partiel d'eau du bassin (10.2) égale à 0,45 fois le débit volumétrique total d'eau du bassin (10) extrait par aspiration.

6. Procédé de traitement des eaux selon l'une des revendications 1 à 5, **caractérisé en ce que** les espaces de réaction (2, 3) utilisés pour le traitement biotechnologique de l'eau du bassin sont disposés en cascades et sont disposés séparément l'un de l'autre.

7. Procédé de traitement des eaux selon l'une des revendications 1 à 6, **caractérisé en ce que** la qualité et la quantité de salissure de l'eau du bassin sont contrôlées en permanence par des capteurs (14) lors du processus de nettoyage, et le résultat du suivi de ces informations permet d'assurer ensuite un dosage automatique d'additifs (8):
■ des oxydants organiques chimiques (8.1) et/ou
■ une population microorganique comme cultures starters (8.2) et/ou
■ des sels nutritifs et/ou
■ des floculants biologiquement dégradables (8.3) et/ou
■ de l'air (8.4).

8. Procédé de traitement des eaux selon l'une des revendications 1 à 7, **caractérisé en ce qu'**un inoculum est ajouté par dosage au premier espace de réaction (2) avant le début du processus de nettoyage et que la quantité de la population microorganique (8.2) active reste maintenue grâce à l'adjonction, par dosage permanent, de microorganismes supplémentaires.

9. Procédé de traitement des eaux selon l'une des revendications 1 à 8, **caractérisé en ce que** le processus de traitement biotechnologique qui s'effectue dans le premier espace de réaction (2) a lieu dans des conditions qui se situent entre l'aérobie et l'anoxie.

10. Procédé de traitement des eaux selon l'une des revendications 1 à 9, **caractérisé en ce que** le premier espace de réaction (2) présentant les caractéristiques d'une cuve malaxeuse, est alimenté en oxygène par l'adjonction supplémentaire d'air (8.4).

11. Procédé de traitement des eaux selon l'une des revendications 1 à 10, **caractérisé en ce que** l'acide peracétique est utilisé comme oxydant et désinfectant organique chimique (8.1) dans le deuxième espace de réaction (3).

12. Procédé de traitement des eaux selon l'une des revendications 1 à 11, **caractérisé en ce que** les substances contenues dans l'eau du premier débit volumétrique partiel d'eau du bassin peuvent subir la métabolisation également par l'adjonction de microorganismes (8.2) en appliquant le procédé de fermentation à haute densité cellulaire (HDF) dans le premier espace de réaction (2) dont la concentration maximale en biomasse ne dépasse pas les 30 g/l.

13. Procédé de traitement des eaux selon l'une des revendications 1 à 12 **caractérisé en ce que** l'adjonction de l'oxydant organique chimique (8.1) qui est l'acide peracétique a lieu surtout pendant le temps d'occupation du bassin de mouvement et de thérapie (1), le traitement biotechnologique de l'eau du bassin (1.1), pour la plupart des cas, a lieu en continu.

14. Procédé de traitement des eaux selon l'une des revendications 1 à 13, **caractérisé en ce qu'**une étape supplémentaire de nettoyage anaérobie est prévue pour empêcher l'enrichissement de l'eau du bassin en des combinaisons azotées.

15. Procédé de traitement des eaux selon l'une des revendications 1 à 14, **caractérisé en ce qu'**une élimination anaérobie du phosphate et/ou une étape de nettoyage physique chimique ont lieu en cas d'une augmentation de la charge phosphatique de l'eau du bassin.
